# EUROPEAN PATENT APPLICATION

(11) **EP 2 685 592 A1**
(43) Date of publication of application: **15.01.2014**
(21) Application number: 12755163.8
(22) Date of filing: 06.03.2012
(51) Int. Cl.: H02J 7/02, H01M 10/42

(54) **BALANCE CORRECTION DEVICE AND ELECTRICITY STORAGE SYSTEM**

(30) Priority: 08.03.2011 JP 2011050662
(71) Applicant: EVTD Inc., Bunkyo-ku, Tokyo 113-0033 (JP)
(72) Inventor: NAKAO, Fumiaki, Tokyo 113-0033 (JP)
(74) Representative: Piotrowicz, Pawel Jan Andrzej
(86) International application number: PCT/JP2012/001537
(87) International publication number: WO 2012/120878

(57) **Abstract**

Excess current is prevented from flowing through an electric storage cell. an inductor having an end electrically connected to a connection point between an end of the first electric storage cell and an end of the second electric storage cell; a first switching device electrically connected between another end of the inductor and another end of the first electric storage cell; a second switching device electrically connected between the other end of the inductor and another end of the second electric storage cell; and a current restricting device connected in series with the inductor, the current restricting device restricting a current flowing through the inductor once a magnitude of the current flowing through the inductor has exceeded a predetermined value are provided.

## Description

### BACKGROUND

### 1. TECHNICAL FIELD

The present invention relates to a balance correction apparatus and an electric storage system.

### 2. RELATED ART

Many electric storage cells connected in series may be used. In that case, when there is variation caused between voltage of these electric storage cells, the lifetime of the electric storage cells is likely shortened. So as to tackle with this problem, a balance correction circuit that includes an inductor, a switching device, and a driving circuit for the switching device has been proposed to equalize the voltage of electric storage cells.

### <Patent Citations>

Patent Document 1: Japanese Patent Application Publication No. 2006-067742
Patent Document 1: Japanese Patent Application Publication No. 2008-017605
Patent Document 1: Japanese Patent Application Publication No. 2009-232660

### SUMMARY

In the mentioned balance correcting circuit, when the switching device is left closed for some reason, there is possibility of excess current running through the electric storage cells. Therefore, it is an object of an aspect of the innovations herein to provide a balance correction apparatus and an electric storage system, which are capable of overcoming the above drawbacks accompanying the related art. The above and other objects can be achieved by combinations described in the claims.

According to a first aspect of the present invention, provided is a balance correction apparatus that equalizes a voltage of a first electric storage cell and a voltage of a second electric storage cell, the first electric storage cell and the second electric storage cell being connected in series with each other, including: an inductor having an end electrically connected to a connection point between an end of the first electric storage cell and an end of the second electric storage cell; a first switching device electrically connected between another end of the inductor and another end of the first electric storage cell; a second switching device electrically connected between the other end of the inductor and another end of the second electric storage cell; and a current restricting device connected in series with the inductor, the current restricting device restricting a current flowing through the inductor once a magnitude of the current flowing through the inductor has exceeded a predetermined value.

In the balance correction apparatus stated above, the current restricting device may be connected in series with the inductor between the connection point between the end of the first electric storage cell and the end of the second electric storage cell and a connection point between the first switching device and the second switching device. In the balance correction apparatus stated above, the current restricting device may include: a first current restricting device connected in series with the inductor between the other end of the first electric storage cell and the first switching device; and a second current restricting device connected in series with the inductor between the other end of the second electric storage cell and the second switching device.

In the balance correction apparatus stated above, the current restricting device may be a fuse. In the balance correction apparatus stated above, the fuse may be an overcurrent circuit breaker type fuse or a temperature fuse.

According to a second aspect of the present invention, provided is An electric storage system including: a first electric storage cell and a second electric storage cell connected in series with each other; and the balance correction apparatus stated above for equalizing a voltage of the first electric storage cell and a voltage of the second electric storage cell.

The summary clause does not necessarily describe all necessary features of the embodiments of the present invention. The present invention may also be a sub-combination of the features described above.

### BRIEF DESCRIPTION OF THE DRAWINGS

Fig. 1 schematically shows an example of an apparatus 100 including an electric storage system 110.
Fig. 2 schematically shows an example of an electric storage system 210.
Fig. 3 schematically shows an example of an operation of the electric storage system 210.
Fig. 4 schematically shows an example of an electric storage system 410.

### DESCRIPTION OF EXEMPLARY EMBODIMENTS

Hereinafter, some embodiments of the present invention will be described. The embodiments do not limit the invention according to the claims, and all the combinations of the features described in the embodiments are not necessarily essential to means provided by aspects of the invention.

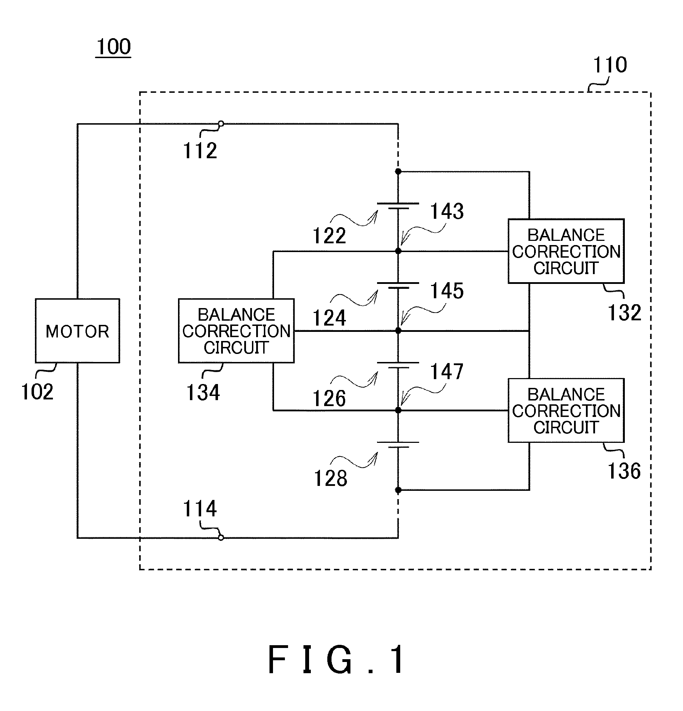

Fig. 1 schematically shows an example of an apparatus 100 including an electric storage system 110. The apparatus 100 includes a motor 102 and an electric storage system 110. The apparatus 100 may be a transport apparatus such as an electric automobile, a hybrid automobile, an electric two wheeled vehicle, a rail vehicle, and an elevator. The apparatus 100 may be an electric appliance such as a personal computer and a portable telephone. The motor 102 is electrically connected to the electric storage system 110, and uses power supplied by the electric storage system 110. The motor 102 may be used as a regenerative brake. The motor 102 may be an example of an electric load.

The electric storage system 110 is electrically connected to the motor 102, to supply power to the motor 102 (occasionally referred to as "discharge of the electric storage system"). The electric storage system 110 is electrically connected to a charge apparatus not illustrated in the drawings, to store electric energy (occasionally referred to as "charge of the electric storage system").

The electric storage system 110 includes a terminal 112, a terminal 114, a plurality of electric storage cells connected in series, and a plurality of balance correction circuits. The plurality of electric storage cells include an electric storage cell 122, an electric storage cell 124, an electric storage cell 126, and an electric storage cell 128. The plurality of balance correction circuits include a balance correction circuit 132, a balance correction circuit 134, and a balance correction circuit 136. The balance correction circuit 132, the balance correction circuit 134, and the balance correction circuit 136 may be an example of a balance correction apparatus.

In this specification, the term "electrically connected" is not limited to describe a concept that an element and another element are in direct connection. The term also includes a concept that an element and another element are connected with a third element therebetween. In addition, the term is not limited to describe such a concept that an element and another element are physically connected to each other. For example, an input coil and an output coil of a transformer, although not physically connected to each other, are electrically connected to each other. Furthermore, this term is not limited to describe such a concept that an element and another element are actually being electrically connected to each other; it can also be used to describe such a concept that an element and another element are brought into electrical connection to each other when the electric storage cell and the balance correction circuit are electrically connected to each other. The term "connected in series" indicates that an element and another element are electrically connected in series.

The terminal 112 and the terminal 114 electrically connect an apparatus (e.g., the motor 102, charge apparatus) outside the system, to an electric storage system 110. The electric storage cell 122, the electric storage cell 124, the electric storage cell 126, and the electric storage cell 128 are connected to each other in series. The electric storage cell 122, the electric storage cell 124, the electric storage cell 126, and the electric storage cell 128 may be a secondary battery or a capacitor. The electric storage cell 122, the electric storage cell 124, the electric storage cell 126, and the electric storage cell 128 may be a lithium ion battery. Each of the electric storage cell 122, the electric storage cell 124, the electric storage cell 126, and the electric storage cell 128 may include a plurality of electric storage cells.

For example, when the electric storage cell 122 and the electric storage cell 124 have different manufacturing quality, deterioration degree or the like from each other, the electric storage cell 122 and the electric storage cell 124 may have different battery characteristics from each other. Some examples of the battery characteristics are battery capacity, and a discharge voltage characteristic that represents the relation between the battery voltage and the discharge time. For example, as an electric storage cell deteriorates, the battery voltage will drop within a shorter discharge time.

When the batter characteristics of the electric storage cell 122 and the electric storage cell 124 are different from each other, even though the voltage therebetween was substantially the same at the charge completion of the electric storage system 110, the electric storage cell 122 and the electric storage cell 124 will have voltage different from each other, as the electric storage system 110 discharges. In addition, even though the electric storage cell 122 and the electric storage cell 124 had substantially the same voltage at the beginning of charging the electric storage system 110, the voltage for the electric storage cell 122 and the electric storage cell 124 will differ from each other as the electric storage system 110 is charged.

The electric storage cell 122 and the electric storage cell 124 have a predetermined range of available charge level (occasionally referred to as "State of Charge: SOC"), and so if there is difference in voltage between the electric storage cell 122 and the electric storage cell 124, the utilization efficiency of the electric storage system 110 deteriorates. In other words, the electric storage system 110 will have an improved utilization efficiency by equalizing the voltage between the electric storage cell 122 and the electric storage cell 124.

The balance correction circuit 132 equalizes the voltage between the electric storage cell 122 and the electric storage cell 124. The balance correction circuit 132 is electrically connected to an end of the electric storage cell 122 nearer the terminal 112 (occasionally referred to as "positive pole side"), as well as to a connection point 143 between an end of the electric storage cell 122 nearer the terminal 114 (occasionally referred to as "negative pole side") and the positive pole side of the electric storage cell 124. The balance correction circuit 132 is electrically connected to the connection point 143 and a connection point 145 between the negative pole side of the electric storage cell 124 and the positive pole side of the electric storage cell 126.

Although not illustrated in the drawings, the balance correction circuit 132 may include an inductor electrically connected to the connection point 143. By electrically connecting the balance correction circuit 132, the electric storage cell 122, and the electric storage cell 124 as described above, a first circuit including the electric storage cell 122 and the inductor and a second circuit including the electric storage cell 124 and the inductor are formed. The balance correction circuit 132 runs current to the first circuit and the second circuit alternately. Accordingly, electric energy can be exchanged between the electric storage cell 122 and the electric storage cell 124 via the inductor. As a result, the voltage can be equalized between the electric storage cell 122 and the electric storage cell 124.

The balance correction circuit 134 equalizes the voltage between the electric storage cell 124 and the electric storage cell 126. The balance correction circuit 134 is electrically connected to the connection point 143, the connection point 145, and a connection point 147 between the negative pole side of the electric storage cell 126 and the positive pole side of the electric storage cell 128. The balance correction circuit 136 equalizes the voltage between the electric storage cell 126 and the electric storage cell 128. The balance correction circuit 136 is electrically connected to the connection point 145, the connection point 147, and the negative pole side of the electric storage cell 128. The balance correction circuit 134 and the balance correction circuit 136 may have a configuration similar to that of the balance correction circuit 132.

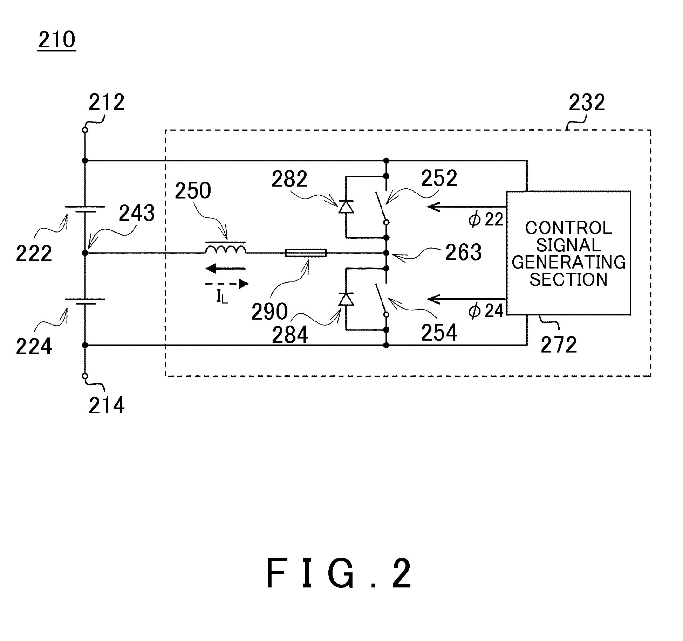

Fig. 2 schematically shows an example of an electric storage system 210. The electric storage system 210 includes a terminal 212, a terminal 214, an electric storage cell 222 and an electric storage cell 224 connected in series, and a balance correction circuit 232. The balance correction circuit 232 may be an example of a balance correction apparatus. The electric storage cell 222 may be an example of a first electric storage cell. The electric storage cell 224 may be an example of a second electric storage cell.

The terminal 212 and the terminal 214 may have a configuration similar to that of the terminal 112 and that of the terminal 114 of the electric storage system 110, respectively. The electric storage cell 222 and the electric storage cell 224 may have a configuration similar to that of the electric storage cell 122, the electric storage cell 124, the electric storage cell 126, or the electric storage cell 128. The electric storage system 110 may have a configuration similar to that of the electric storage system 210. The balance correction circuit 132, the balance correction circuit 134, and the balance correction circuit 136 may have a configuration similar to that of the balance correction circuit 232.

The balance correction circuit 232 equalizes the voltage between the electric storage cell 222 and the electric storage cell 224. The balance correction circuit 232 includes an inductor 250, a switching device 252, a switching device 254, a control signal generating section 272, a diode 282, a diode 284, and a fuse 290. The switching device 252 may be an example of a first switching device. The switching device 254 may be an example of a second switching device. The fuse 290 may be an example of a current restricting device.

The balance correction circuit 232 is electrically connected to the positive pole side of the electric storage cell 222 and to a connection point 243 between the negative pole side of the electric storage cell 222 and the positive pole side of the electric storage cell 224. As a result, a first open-close circuit is formed, which includes the electric storage cell 222, the switching device 252, the fuse 290, and the inductor 250. The balance correction circuit 232 is electrically connected to the connection point 243, and to the negative pole side of the electric storage cell 224. As a result, a second open-close circuit is formed, which includes the electric storage cell 224, the inductor 250, the fuse 290, and the switching device 254. The connection point 243 may be an example of a connection point between an end of the first electric storage cell and an end of the second electric storage cell.

An end of the inductor 250 is electrically connected to the connection point 243. The other end of the inductor 250 may be electrically connected to a connection point 263 between the switching device 252 and the switching device 254. When the ON operation and OFF operation are alternated (occasionally referred to as "ON/OFF operation") between the switching device 252 and the switching device 254, an inductor current I_{L} will be generated in the inductor 250.

The switching device 252 is electrically connected between the other end of the inductor 250 and the positive pole side of the electric storage cell 222. The switching device 252 receives a control signal ϕ22 from the control signal generating section 272, and performs an ON operation or an OFF operation based on this control signal ϕ22. This opens or closes the first open-close circuit. The switching device 252 may be a MOSFET.

The switching element 254 is electrically connected between the other end of the inductor 250 and the negative pole side of the electric storage cell 224. The switching element 254 receives a control signal ϕ24 from the control signal generating section 272, and performs an ON operation or an OFF operation based on this control signal ϕ24. This opens or closes the second open-close circuit. The switching device 254 may be a MOSFET.

The control signal generating section 272 generates a control signal ϕ22 which controls the ON/OFF operation of the switching device 252 and a control signal ϕ24 which controls the ON/OFF operation of the switching device 254. The control signal generating section 272 supplies a control signal ϕ22 to the switching device 252. The control signal generating section 272 supplies a control signal ϕ24 to the switching device 254.

The control signal generating section 272 may generate the control signals ϕ22 and ϕ24 such that the ON/OFF operation can alternate between the switching device 252 and the switching device 254. Accordingly, the ON/OFF operation can alternate between the switching device 252 and the switching device 254. The control signals ϕ22 and ϕ24 may be a square wave having a duty ratio of 50%. The duty ratio can be calculated as a ratio of ON period with respect to a period of the square wave.

The control signal generating section 272 may be a pulse generator generating an array of pulses at a predetermined period. The control signal generating section 272 may be a variable pulse generator that can control the duty ratio of at least one of the control signals ϕ22 and ϕ24 to be variable. The control signal generating section 272 may be formed on the same substrate that has the switching device 252 and the switching device 254.

The diode 282 is formed in parallel with the switching device 252, and runs a current from the other end of the inductor 250 towards the positive pole side of the electric storage cell 222. The diode 284 is formed in parallel with the switching device 254, and runs a current from the negative pole side of the electric storage cell 224 towards the other end of the inductor 250. The diode 282 and the diode 284 may be a parasitic diode formed equivalently between the source and the drain of the MOSFET.

By providing the diode 282 and the diode 284, even in a case in which the inductor current I_{L} remains during a period in which both of the switching device 252 and the switching device 254 are brought to the OFF state, the inductor current I_{L} can continue running through the diode 282 and the diode 284. This improves the utilization rate of the inductor current I_{L} generated in the inductor 250. This can also prevent surge current from occurring, which would occur when the inductor current I_{L} is interrupted.

The fuse 290 is connected in series with the inductor 250. In the present embodiment, an end of the fuse 290 is electrically connected to the other end of the inductor 250. The other end of the fuse 290 is electrically connected to connection point 263 between the switching device 252 and the switching device 254. The fuse 290 restricts the current from running to the inductor 250 once the magnitude of the current flowing through the inductor 250 has exceeded a predetermined value. By the arrangement of connecting the fuse 290 in series with the inductor 250, excess current is prevented from running in at least one of the electric storage cell 222 and the electric storage cell 224 even in such a case in which there is failure in at least one of the switching device 252, the switching device 254, and the control signal generating section 272 thereby closing at least one of the switching device 252 and the switching device 254.

In this way, the electric storage cell 222 and the electric storage cell 224 are protected. For example, usually an open-short test is conducted before shipping of a balance correction circuit 232 by selecting out an arbitrary balance correction circuit 232. The aim of the test is to confirm that the electric storage system 210 can remain secured even when the semiconductor device is in failure. Because of the arrangement in which the fuse 290 is connected in series with the inductor 250, even when at least one of the switching device 252 and the switching device 254 is closed in the open-short test, the electric storage cell 222 and the electric storage cell 224 can remain protected. Therefore, the security of the electric storage system 210 can be secured.

The present embodiment has dealt with an example in which the fuse 290 is provided between the other end of the inductor 250 and the connection point 263. However, the number of the fuses 290 as well as the position at which the fuse(s) 290 is(are) provided are not limited to as described. In fact, the fuse 290 may be connected in series with the inductor 250 between the connection point 243 and the inductor 250. According to this arrangement, it becomes possible to protect both of the electric storage cell 222 and the electric storage cell 224 by a single fuse.

The fuse 290 may be an overcurrent circuit breaker type fuse or a temperature fuse. In the present embodiment, the fuse was an example of the current restricting device. However, the current restricting device is not limited to a fuse. In fact, the current restricting device may be a PTC thermistor which builds up an internal resistance in response to the temperature increase. The current restricting device may also be an electric current breaker.

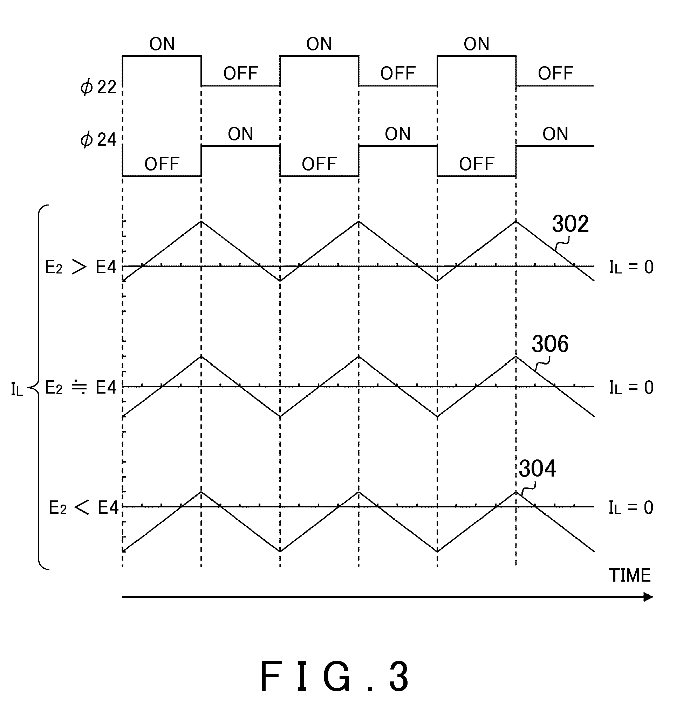

Fig. 3 schematically shows an example of an operation of the electric storage system 210. Fig. 3 shows a graph 302, a graph 304, and a graph 306, in correspondence with an example of a waveform of the control signal ϕ22 and ϕ24. The graph 302, the graph 304, and the graph 306 have a horizontal axis representing an elapse of time. The longitudinal axis thereof represents the magnitude of the inductor current I_{L}. The magnitude of the inductor current I_{L} in Fig. 3 assumes that the current running in the direction from the connection point 263 towards the connection point 243 is positive (represented by the solid arrow in Fig. 2).

The graph 302 schematically shows an exemplary chronological change of the inductor current I_{L} when the voltage E₂ of the electric storage cell 222 is larger than the voltage E₄ of the electric storage cell 224. The graph 304 schematically shows an exemplary chronological change of the inductor current I_{L} when the voltage E₂ of the electric storage cell 222 is smaller than the voltage E₄ of the electric storage cell 224. The graph 306 schematically shows an exemplary chronological change of the inductor current I_{L} when the voltage E₂ of the electric storage cell 222 is substantially the same as the voltage E₄ of the electric storage cell 224.

In Fig. 3, the control signals ϕ22 and ϕ24 are a square wave having a duty ratio of 50%. As shown in Fig. 3, the control signals ϕ22 and ϕ24 have logics or phase polarities complementary to each other so that one of the switching device 252 and the switching device 254 can be OFF while the other is ON.

As shown in the graph 302, when the voltage E₂ of the electric storage cell 222 is larger than the voltage E₄ of the electric storage cell 224, and when the switching device 252 is ON, the current runs along the current path from the positive polarity side of the electric storage cell 222, the switching element 252, the connection point 263, the fuse 290, the inductor 250, the connection point 243, to the negative polarity side of the electric storage cell 222. In this example, the inductor 250 is charged with the inductor current I_{L} flowing in the direction shown by the solid arrow in Fig. 2.

Subsequently, the switching device 252 is brought to the OFF state, and the switching device 254 is brought to the ON state. Then, the inductor current I_{L} charged in the inductor 250 is discharged along the current path from an end of the inductor 250, the connection point 243, the electric storage cell 224, the switching device 254, the connection point 263, the fuse 290, to the inductor 250. This discharge is performed while charging the electric storage cell 224. As shown in Fig. 3, the inductor current I_{L} decreases due to discharge as time goes by, and when the discharge current becomes 0, the inductor 250 will have flowing therein a charge current that is in a direction reverse to the discharge current.

Here, there is a possibility of excess current flowing between the connection point 243 and the connection point 263 when the switching device 252 remains closed for example by failure caused in at least one of the switching device 252 and the control signal generating section 272. However, according to the present embodiment, the fuse 290 will melt down once the magnitude of the current flowing between the connection point 243 and the connection point 263 has exceeded a predetermined value, thereby restricting the current flowing through the inductor 250. This helps protect the electric storage cell 222.

As the graph 304 shows, when the voltage E₂ of the electric storage cell 222 is smaller than the voltage E₄ of the electric storage cell 224, and when the switching device 254 is ON, the current runs along the current path from the positive polarity side of the electric storage cell 224, the connection point 243, the inductor 250, the fuse 290, the connection point 263, the switching device 254, to the negative polarity side of the electric storage cell 224. In this example, the inductor 250 is charged with the inductor current I_{L} flowing in the direction shown by the dotted arrow in Fig. 2.

Subsequently, the switching device 254 is brought to the OFF state, and the switching device 252 is brought to the ON state. Then, the inductor current I_{L} charged in the inductor 250 is discharged along the current path from the other end of the inductor 250, the fuse 290, the connection point 263, the switching device 252, the electric storage cell 222, the connection point 243, to the end of the inductor 250. This discharge is performed while charging the electric storage cell 222.

Here, there is a possibility of excess current flowing between the connection point 243 and the connection point 263 when the switching device 254 remains closed for example by failure caused in at least one of the switching device 254 and the control signal generating section 272. However, according to the present embodiment, the fuse 290 will melt down once the magnitude of the current flowing between the connection point 243 and the connection point 263 has exceeded a predetermined value, thereby restricting the current flowing through the inductor 250. This helps protect the electric storage cell 224.

As described above, by controlling the balance correction circuit 232 to alternately run current to the first open-close circuit and to the second open-close circuit, electric energy can be exchanged between the electric storage cell 122 and the electric storage cell 124 via the inductor 250. As a result, the voltage can be equalized between the electric storage cell 122 and the electric storage cell 124.

As the graph 306 shows, when the voltage E₂ of the electric storage cell 222 is substantially the same as the voltage E₄ of the electric storage cell 224, during the period in which the switching device 252 or the switching device 254 is ON, discharge and charge of the inductor current I_{L} is pursued substantially in the equal amount. As a result, the voltage can be maintained substantially balanced.

The present embodiment is based on the assumption that control signals ϕ22 and ϕ24 have a duty ratio of 50%, for making explanation simple. However, the control signals ϕ22 and ϕ24 are not limited to this configuration. In fact, the duty ratio between the control signals ϕ22 and ϕ24 can be changed according to the difference in voltage between the electric storage cell 222 and the electric storage cell 224.

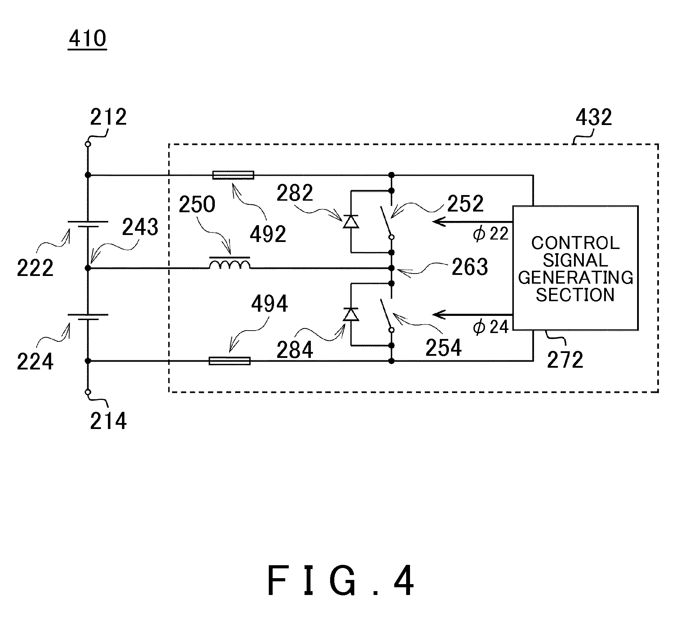

Fig. 4 schematically shows an example of an electric storage system 410. The electric storage system 410 includes a terminal 212, a terminal 214, an electric storage cell 222 and an electric storage cell 224 connected in series, and a balance correction circuit 432. The balance correction circuit 432 may be an example of the balance correction apparatus.

The balance correction circuit 432 is different from the balance correction circuit 232 in that the first open-close circuit and the second open-close circuit explained with reference to Fig. 2 respectively have a current restricting device. For other features, the balance correction circuit 432 may have a configuration that is the same as that of the balance correction circuit 232. The portions of the balance correction circuit 234 that are the same as or similar to those of the balance correction circuit 232 are assigned the same reference numerals and not explained below. The electric storage system 110 may have a configuration similar to that of the electric storage system 410. The balance correction circuit 132, the balance correction circuit 134, and the balance correction circuit 136 may have a configuration similar to that of the balance correction circuit 432.

The balance correction circuit 432 equalizes the voltage between the electric storage cell 222 and the electric storage cell 224. The balance correction circuit 432 includes an inductor 250, a switching device 252, a switching device 254, a control signal generating section 272, a diode 282, a diode 284, a fuse 492, and a fuse 494. The fuse 492 and the fuse 494 may be an example of the current restricting device.

The fuse 492 may be provided between the positive polarity side of the electric storage cell 222 and the switching device 252. Accordingly, the fuse 492 will be connected in series with the inductor 250 when the switching device 252 is operated ON. There is a possibility of excess current flowing between the positive polarity side of the electric storage cell 222 and the switching device 252 when the switching device 252 remains closed for example by failure caused in at least one of the switching device 252 and the control signal generating section 272. However, according to the present embodiment, the fuse 492 will melt down once the magnitude of the current flowing between the positive polarity side of the electric storage cell 222 and the switching device 252 has exceeded a predetermined value, thereby restricting the current flowing through the inductor 250. This helps protect the electric storage cell 222.

The fuse 494 may be provided between the negative polarity side of the electric storage cell 224 and the switching device 254. Accordingly, the fuse 494 will be connected in series with the inductor 250 when the switching device 254 is operated ON. There is a possibility of excess current flowing between the negative polarity side of the electric storage cell 224 and the switching device 254 when the switching device 254 remains closed for example by failure caused in at least one of the switching device 254 and the control signal generating section 272. However, according to the present embodiment, the fuse 494 will melt down once the magnitude of the current flowing between the negative polarity side of the electric storage cell 224 and the switching device 254 has exceeded a predetermined value, thereby restricting the current flowing through the inductor 250. This helps protect the electric storage cell 224.

At least one of the fuse 492 and the fuse 494 may be an overcurrent circuit breaker type fuse or a temperature fuse. In the present embodiment, the fuse was an example of the current restricting device. However, the current restricting device is not limited to a fuse. In fact, the current restricting device may be a PTC thermistor which builds up an internal resistance in response to the temperature increase. The current restricting device may also be an electric current breaker.

In the present embodiment, the fuse 492 was provided between the positive polarity side of the electric storage cell 222 and the switching device 252. However, the number of the fuses 492 as well as the position at which the fuse(s) 492 is(are) provided are not limited to as described. In fact, the fuse 492 may be provided between the other end of the inductor 250 and the switching device 252. According to this arrangement, the fuse 492 will be connected in series with the inductor 250 when the switching device 252 is operated ON.

In the present embodiment, the fuse 494 was provided between the negative polarity side of the electric storage cell 224 and the switching device 254. However, the number of the fuses 494 as well as the position at which the fuse(s) 494 is(are) provided are not limited to as described. In fact, the fuse 494 may be provided between the other end of the inductor 250 and the switching device 254. According to this arrangement, the fuse 494 will be connected in series with the inductor 250 when the switching device 254 is operated ON.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

- 100: apparatus
- 102: motor
- 110: electric storage system
- 112: terminal
- 114: terminal
- 122: electric storage cell
- 124: electric storage cell
- 126: electric storage cell
- 128: electric storage cell
- 132: balance correction circuit
- 134: balance correction circuit
- 136: balance correction circuit
- 143: connection point
- 145: connection point
- 147: connection point
- 210: electric storage system
- 212: terminal
- 214: terminal
- 222: electric storage cell
- 224: electric storage cell
- 232: balance correction circuit
- 243: connection point
- 250: inductor
- 252: switching device
- 254: switching device
- 263: connection point
- 272: control signal generating section
- 282: diode
- 284: diode
- 290: fuse
- 302: graph
- 304: graph
- 306: graph
- 410: electric storage system
- 432: balance correction circuit
- 492: fuse
- 494: fuse

## Claims

1. A balance correction apparatus that equalizes a voltage of a first electric storage cell and a voltage of a second electric storage cell, the first electric storage cell and the second electric storage cell being connected in series with each other, comprising:
an inductor having an end electrically connected to a connection point between an end of the first electric storage cell and an end of the second electric storage cell;
a first switching device electrically connected between another end of the inductor and another end of the first electric storage cell;
a second switching device electrically connected between the other end of the inductor and another end of the second electric storage cell; and
a current restricting device connected in series with the inductor, the current restricting device restricting a current flowing through the inductor once a magnitude of the current flowing through the inductor has exceeded a predetermined value.

2. The balance correction apparatus according to Claim 1, wherein
the current restricting device is connected in series with the inductor between the connection point between the end of the first electric storage cell and the end of the second electric storage cell and a connection point between the first switching device and the second switching device.

3. The balance correction apparatus according to Claim 1 or Claim 2, wherein
the current restricting device includes:
a first current restricting device connected in series with the inductor between the other end of the first electric storage cell and the first switching device; and
a second current restricting device connected in series with the inductor between the other end of the second electric storage cell and the second switching device.

4. The balance correction apparatus according to any one of Claims 1-3, wherein
the current restricting device is a fuse.

5. The balance correction apparatus according to Claim 4, wherein
the fuse is an overcurrent circuit breaker type fuse or a temperature fuse.

6. An electric storage system comprising:
a first electric storage cell and a second electric storage cell connected in series with each other; and
a balance correction apparatus according to any one of Claims 1-5 for equalizing a voltage of the first electric storage cell and a voltage of the second electric storage cell.
